# EUROPEAN PATENT APPLICATION

(11) **EP 1 184 797 A2**
(43) Date of publication of application: **06.03.2002**
(21) Application number: 01120435.1
(22) Date of filing: 27.08.2001
(51) Int. Cl.: G06F 17/30, H04L 29/06

(54) **Network dial-up access servo-system and method**

(30) Priority: 28.08.2000 US 228838 P
(71) Applicant: ViaGold Direct Network Limited, Kwun Tong, Kowloon, Hong Kong (CN)
(72) Inventor: Kung, Tien Mei, Sheung Wan, Hong Kong (HK)
(74) Representative: Kilian, Helmut, Dr.

(57) **Abstract**

A network dial-up servo system (2) and method are used in Internet. The database of the network dial-up servo system (2) stores the index of number type. These indexes correspond to the World Wide Web homepage data in the database. The users are connected to the network dial-up servo system (2) by a phone dial-up operation. After the customer's computer (1) is network-connected to the network dial-up servo system (2), the user inputs a number from the input universal resource location box in browser frame. By the services and operations of the network dial-up servo system, a complete contrast and a fuzzy contrast way is used to search for a network station homepage. The browser in the customer's computer may be connected to the World Wide Web homepage through this network dial-up servo system (2).

## Description

### FIELD OF THE INVENTION

The present invention relates to a network dial-up servo system and the method of the same, wherein the user inputs numbers into the input universal resource location box (input URL box) for searching network station homepages through the service and operation of the network dial-up servo system.

### BACKGROUND OF THE INVENTION

The current ISP (Internet Service Provider) provides the service of the dial-up through a phone wire and provides the function of DNS (Domain Name System). As a user dial-up to the ISP, when the user requests to query the domain name-TCP/IP address, the database in the domain name system DNS servo of the ISP will provide required data, and then find the TCP/IP address with respect to the domain name. If the user inputs the TCP/IP address directly to the input URL box on the browser frame, the DNS servo of ISP is unnecessary to convert the domain name into the TCP/IP address. It directly connects the browser to the TCP/IP address for downloading web page and then displays the page on the browser frame. When the user inputs the domain name in the input URL box on the browser frame, then the domain name system DNS servo will convert the domain name into the TCP/IP address, which contrasts the domain name inputted by the user with the respective TCP/IP address.

ISP provides a way to the user for checking a network station. The user must inputs TCP/IP address on the input URL box of the browser frame. For example, the input TCP/IP address is 192.168.5.10, or inputs a complete domain name, for example, www.hinet,net. Thereby, by the processing of the domain name system DNS servo of the ISP, a complete domain name is converted into a respective TCP/IP address for searching for a respective network station homepage. While it is impossible to input numbers directly on the input URL box of the browser frame for checking a network station homepage.

Furthermore, the ISP establishes a portal network station homepage so that as the user's phone dial-up service is executed, the user can enter into the portal network station homepage at first. After entering into the portal network station homepage, the user inputs the related message to the checking input field on a searching for other network station homepage of the portal network station homepage. The user inputs the keyword or keyword set, which may be an English word or a Chinese word. The key word set includes at least one English word or Chinese word. Thereby, the user may search for other network station homepage by the function of searching other network station homepage provided by the ISP.

In the prior art domain name system DNS servo of the ISP and the checking system of the portal network station, no function classifying other network station homepage by the characteristics of numbers. For example, in the database, a first digital of 0 may be used to classify the network station homepage about mechanics. Furthermore, the second digital may be used as a sub-class. For example, 01 represents car in the mechanic field, and 02 represents motorcycle in the mechanic field. The first digitals of 01 and 02 are 0, which represent that they are related to mechanics. Moreover, 1 in the 01 and 2 in the 02 represent car and motorcycle, respectively.

In summary, the prior art network dial-up servo system and the method of the same provided by the ISP, the user must input TCP/IP address to the input URL box on the browser frame or input correct domain names. Thereby, by the processing of the domain name system DNS servo of the ISP, a complete domain name is converted into a respective TCP/IP address for searching for a respective network station homepage. ISP provides a way to the user for checking a network station. The user must inputs TCP/IP address on the input URL box of the browser frame. For example, the input TCP/IP address is 192.168.5.10, or inputs a complete domain name, for example, www.hinet,net. Thereby, by the processing of the domain name system DNS servo of the ISP, a complete domain name is converted into a respective TCP/IP address for searching for a respective network station homepage. While it is impossible to input numbers directly on the input URL box of the browser frame for checking a network station homepage. The user can not search for a TCP/IP address through the domain name system DNS servo by inputting numbers to the input URL box on the browser frame, and the number can not be converted into respective TCP/IP address. Namely, after the user enters into a portal network station homepage of the ISP, then the user inputs the related texts, or correct numbers with correct digitals, or selecting an item to the generic menu to the checking input field on a searching for other network station homepage of the portal network station homepage for searching the network station homepage. Therefore, the user enters into the portal network station homepage to use the function of searching other network station homepage provided by the ISP. In the prior art domain name system DNS servo of the ISP and the checking system of the portal network station, no function classifying other network station homepage by the characteristics of numbers. The digital property of numbers is not used to class the network station homepage, and the number in different digital is not used to class the network station homepage. That is, the number index does not be used to classify the network or data.

To find a novel network dial-up servo system and the method of the same is necessary. Other than providing the function of converting domain name and TCP/IP address in the prior art domain name system DNS servo, the network dial-up servo system can enter numbers in the input universal resource location box of a browser frame and then performs an query request service about numbers and TCP/IP address by complete contrast or fuzzy contrast so that as the user enters an number, then the number is converted into a respective or a related TCP/IP address for finding the respective or related TCP/IP address. When the TCP/IP address is found, then by the network dial-up servo system, the customer's computer is connected to the World Wide Web. The browser in the customer's computer can be connected to the World Wide Web homepage without enter into the portal network station homepage provided by the ISP Internet dial-up service provider or other portal network station homepage. By complete contrast or fuzzy contrast, the network dial-up servo system can enter numbers in the input universal resource location box of a browser frame and then searches other network station homepage by a complete contrast or a fuzzy contrast way. The user is unnecessary to enter into the input field for searching in any network station homepage and is unnecessary to input any data in any portal network station homepage or to select the items in the generic menu in the network station homepage for finding other network station to be searched. Furthermore, with comparing to the domain name system DNS servo of the ISP Internet dial-up service provider and the searching system for the portal network stations of the ISP Internet dial-up service provider, in the database of the network dial-up servo system in the present invention, by the digital property, the network stations are classified and the number in different digitals are used to classified the network stations. Namely, by the number index, other network stations are used to classify other network stations.

In order to solve aforesaid problem about the prior art network dial-up servo system and the system of the same, a novel network dial-up servo system and the method of the same is disclosed. Other than providing the conversion function of domain names into TCP/IP addresses in the domain name system DNS servo, the database of the network dial-up servo system stores the indexs of number type which is respective to the World Wide Web homepage address data stored in the database. The user's computer is connected to the network dial-up servo system through a network. The user input directly the TCP/IP address or number from the input universal resource location box of the browser frame and queries a request to the network dial-up servo system. Through the processing of the network dial-up servo system, the input number data is converted into respective or pertinent TCP/IP address. Other than processing the input TCP/IP address and a complete network domain name, the number inputted by the user is converted into respective or related TCP/IP address by a complete contrast or a fuzzy contrast way so as to further search for the network station homepage to be found. The browser in the customer's computer can be connected to the World Wide Web homepage without enter into the portal network station homepage provided by the ISP Internet dial-up service provider or other portal network station homepage. By complete contrast or fuzzy contrast, the network dial-up servo system can enter numbers in the input universal resource location box of a browser frame and then searches other network station homepage by a complete contrast or a fuzzy contrast way. The user is unnecessary to enter into the input field for searching in any network station homepage and is unnecessary to input any data in any portal network station homepage or to select the items in the generic menu in the network station homepage for finding other network station to be searched. Furthermore, with comparing to the domain name system DNS servo of the ISP Internet dial-up service provider and the searching system for the portal network stations of the ISP Internet dial-up service provider, in the database of the network dial-up servo system in the present invention, by the digital property, the network stations are classified and the number in different digitals are used to classified the network stations. Namely, by the number index, other network stations are used to classify other network stations.

### SUMMARY OF THE INVENTION

Accordingly, the primary object of the present invention is to provide a network dial-up servo system and method are used in Internet. By the digital property, the network stations are classified and the number in different digitals are used to classified the network stations. The database of the network dial-up servo system stores the index of number type. These indexs are correspondent to the World Wide Web homepage data in the database. The users are connected to the network dial-up servo system by a phone dial-up operation. By the services and operations of the network dial-up servo system, a complete contrast way is used to search for a network station homepage.

Another object of the present invention is to provide a network dial-up servo system and method are used in Internet. By the digital property, the network stations are classified and the number in different digitals are used to classified the network stations. The database of the network dial-up servo system stores the index of number type. These indexs are correspondent to the World Wide Web homepage data in the database. The users are connected to the network dial-up servo system by a phone dial-up operation. The network dial-up servo system searches for a TCP/IP address according to the number inputted by the user through a complete contrast way. If the complete contrast can no find a desired TCP/IP address, then the fuzzy contrast is used to find the network station homepage related to the number.

To achieve the object, the present invention provides a network dial-up servo system and method used in Internet. The database of the network dial-up servo system stores the index of number type. These indexs are correspondent to the World Wide Web homepage data in the database. The users are connected to the network dial-up servo system by a phone dial-up operation. After the customer's computer is network-connected to the network dial-up servo system, the user inputs a number from the input universal resource location box in browser frame. By the services and operations of the network dial-up servo system, a complete contrast and a fuzzy contrast way is used to search for a network station homepage. The browser in the customer's computer may be connected to the World Wide Web homepage through this network dial-up servo system.

The network dial-up servo system includes a network dial-up service module, a query request input interface, a searching engine control module, a complete contrast searching engine, a fuzzy contrast searching engine, a database, a message data control module, and an output control module.

The network dial-up service module provides a network dial-up service. The user in the network dial-up service module has the user account and user authority and then he (or she) may be connected to the network dial-up service module through a network. After the user's computer is connected to the network dial-up service module through a network, then the user may input data on the input universal resource location box of the browser frame for requesting to the network dial-up servo system. By the service of the network dial-up servo system, the frame is connected to another network station homepage. After the network dial-up service module receives the connecting request for the network station homepage from the customer's computer. The connection request is inputted to the query request input interface.

The query request input interface serves for receiving a query request from the user's computer through the network dial-up service module for informing the message data control module to repair for receiving the query result from the searching engine control module. The query request input interface sends the query result from the user end to the searching engine control module for being further processed.

The searching engine control module serves for receiving the query request from the query request input interface (therefore, number is converted into respective TCP/IP address) and controls and manages to the complete contrast searching engine and the fuzzy contrast searching engine. Then, this query request is sent to the complete contrast searching engine. The searching engine control module sends the TCP/IP address respective or related to the TCP/IP address found after operation of the complete contrast searching engine, fuzzy contrast searching engine, and database.

The complete contrast searching engine will receive the number data of the query request from the searching engine control module and performs the operation of data and TCP/IP address contrast according to the number data and with the assisting of the database for finding the network station homepage address with respect to these number data. When executing the contrast of number with network station homepage address by the complete contrast searching engine, the network station homepage address with respect to the number is acquired by a complete contrast way. When the complete contrast searching engine performs contrast of number with the network station homepage address, if the network station homepage address with respect to the number can not be found by the complete contrast method, the complete contrast searching engine inputs this data into the fuzzy contrast searching engine for fuzzy contrasting these number data with the network station homepage address by the fuzzy contrast searching engine.

The fuzzy contrast searching engine receives the query request number data from the complete contrast searching engine, and performs the operation of contrasting the number with TCP/IP address for finding related network station homepage addresses with respect to these numbers. In performing the operation of contrast of numbers with TCP/IP addresses, the fuzzy contrast searching engine queries the numbers by a fuzzy contrast way for finding the related network station homepage address data. When performing the operation of contrast of number data by a fuzzy contrast searching engine, even the input data from the users are not complete or not correct wholly, the fuzzy contrast searching engine may still perform the operation of contrasting the numbers with the network station homepage addresses so as to find some network station homepage addresses related to the input data. After the fuzzy contrast searching engine finds network station homepage addresses with respect to the number data. Then the data about the network station homepage addresses is sent to the searching engine control module.

The database serves for storing indexs of number type which is correspondent to data of the World Wide Web homepage stored in the database. When adding all the new network station homepage addresses to the database, number type indexs are added for these network station homepage addresses. The new added indexs is correspondent to the network station homepage addresses in the database. By the digital of the number in the number index, the network station homepages are classified. By the number in different digital, the network station homepage is classified into different layers and classes. Namely, by the index, the network station homepages and data are classified into different layers and classed. For example, in the index in the database, the number with in the first digital is used to represent network station homepage index about restaurant. That is, for some number with a first digital of, the item with respect to number is a index about the network station homepage of restaurant. In the network station homepage index of the same type, the second digital in the number of the index represents a sub-class. For example, 11 represent the index of network station homepage about semiconductor in electronic industry, and 12 represent the index of network station homepage about communication of electronic industry. However, the first digitals of the 11 and 12 are 1 which represents index about electronic industry, while 1 and 2 (in the 11 and 12, respectively) represents a sub-class. For example, 1 represents semiconductor industry and 2 represents communication industry.

By the searching engine control module, the message data control module finds the network to be searched by the user or related network by from the TCP/IP addresses with respect to or related to the number data inputted by the user through a complete contrast of a fuzzy contrast searching engine or fuzzy contrast way of the fuzzy contrast searching engine. The searching engine control module connects the browser in the user's computer to the network to be searched or related for sending the data message of the searched network or related network station homepage to the user's computer through the output control module, and these network station homepages are displayed on the browser frame.

The output control module is controlled by the message data control module for sending the network station homepages for the correspondent or related networks to the browser of the customer's computer connected to the network dial-up servo system.

In the process for checking other network station homepage through the network dial-up servo system of the present invention, at first, a user is connected to the network dial-up service module of the network dial-up servo system through a phone wire. After the user's computer 1 is connected to the network dial-up service module through a network, the user may enter numbers to the input universal resource location box in the browser frame for requesting a query to the network dial-up servo system so that through the service of the network dial-up servo system, it is connected to other network station homepage. The network dial-up service module receives the request for the connection of the network station homepage from the customer's computer. The connection request is inputted to the query request input interface. The query request input interface receives the query request from the customer's computer of the network dial-up service module. Then it invokes the searching engine control module for informing the message data control module to receive the query result from the searching engine control module. The query request input interface sends the query request from the customer's computer to the searching engine control module. When the searching engine control module is actuated by the query request input interface, the searching engine control module will receive the query request from the query request input interface (for converting a number into a respective TCP/IP address) and controls and manages to the complete contrast searching engine and the fuzzy contrast searching engine. Then, this query request is sent to the complete contrast searching engine. The complete contrast searching engine performs the operation of contrasting the data according to the number data inputted by the user and with the assisting of the database for finding the network station homepage addresses with respect to these number data. If in the contrast of the number data with the network station homepage addresses, the complete contrast searching engine 24 can acquire the respective network station homepage addresses by a complete contrast way, then the complete contrast searching engine 24 will send the network station homepage address data to the searching engine control module 23. The searching engine control module sends the TCP/IP address data to the message data control module, in which the TCP/IP address is operated by the complete contrast searching engine and the database. If in the contrast of the number data with the network station homepage addresses, the complete contrast searching engine can not acquire the respective network station homepage addresses by a complete contrast way, then the complete contrast searching engine will send the number data to the fuzzy contrast searching engine. The fuzzy contrast searching engine performs the operation of fuzzy-contrasting to the number data. The fuzzy contrast searching engine receives the query request number data from the complete contrast searching engine, and performs the operation of contrasting the number with network station homepage for finding related network station homepage addresses with respect to these numbers. In performing the operation of contrast of numbers with network station homepage, the fuzzy contrast searching engine queries the numbers by a fuzzy contrast way for finding the related network station homepage address data. When performing the operation of contrast of number data by a fuzzy contrast searching engine, even the input data from the users are not complete or not correct wholly, the fuzzy contrast searching engine may still perform the operation of contrasting the numbers with the network station homepage addresses so as to find some network station homepage addresses related to the input data. After the fuzzy contrast searching engine finds network station homepage addresses with respect to the number data. Then the data about the network station homepage addresses is sent to the searching engine control module. The searching engine control module receives the TCP/IP address data respective or related to the number data from the complete contrast searching engine or the fuzzy contrast searching engine. Then, this query request is sent to the complete contrast searching engine. The searching engine control module sends the respective TCP/IP address or related to the TCP/IP address to the message data control module. When the message data control module receives the TCP/IP address respective or related to the number data, the message data control module finds the network stations searched by the user or related network stations through the TCP/IP address. Then the browser in the customer's computer is network-connected to the searched network stations or network stations related for sending the data thereof to the browser of the user's computer through the output control module. The output control module is controlled by the message data control module for sending the home page data of the searched network stations or network stations related to the browser of the network dial-up servo system and then the data is displayed on the browser frame.

The various objects and advantages of the present invention will be more readily understood from the following detailed description when read in conjunction with the appended drawing.

### BRIEF DESCRIPTION OF THE DRAWINGS

Fig. 1 illustrates the system block diagram of the present invention is illustrated, wherein a basic structure block diagram about the connection between the network dial-up servo system of the network dial-up servo method and the user's computer.
Fig. 2 shows a system block diagram, wherein basic structure block diagram about the network dial-up servo method and network dial-up servo system of the present invention is illustrated.
Fig. 3 is a flow schematic view about the network dial-up servo method of the present invention for executing the process of checking the network station homepages.
Fig. 4 is a flow schematic view for explaining the detain process of the contrast of number data by the complete contrast searching engine or the fuzzy contrast searching engine with the database.
Fig. 5 is a flow diagram showing the checking the network station homepage through the network dial-up servo method of the present invention.
Fig. 6 is a schematic flow diagram showing the checking the network station homepage through the network dial-up servo method of the present invention after the user has inputted numbers.
Fig. 7 is a schematic flow diagram showing the checking the network station homepage through the network dial-up servo method of the present invention after the user has inputted numbers, in which a fuzzy contrast is used in the checking the network station homepage.
Fig. 8 is a schematic view showing the relations between the data stored in the database with the TCP/IP addresses or complete domain names according to network dial-up servo system in the embodiments of checking the network station homepage of Figs. 6 and 7, in which different numbers are respective to the different TCP/IP addresses and domain names.

### DETAILED DESCRIPTION OF THE PREFERRED EMBODIMENTS

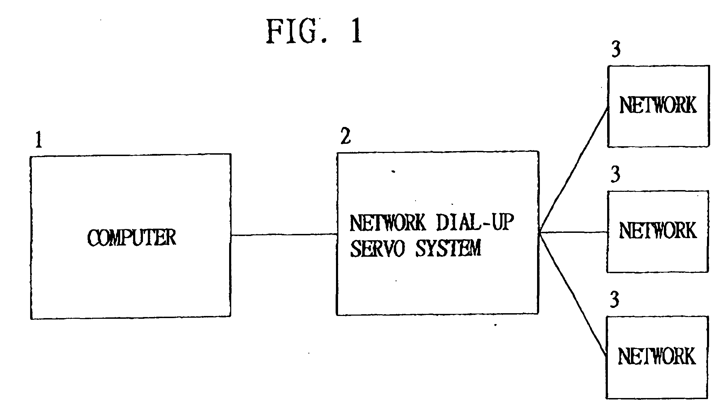

Referring to Fig. 1, the system block diagram of the present invention is illustrated, wherein a basic structure block diagram about the connection between the network dial-up servo system of the network dial-up servo method and the user's computer are illustrated. The user's computer is connected to the network dial-up servo system 2 through a network. The user input directly the TCP/IP address or number from the input universal resource location box of the browser frame and queries a request to the network dial-up servo system 2. Through the processing of the network dial-up servo system 2, the input number data is converted into respective or pertinent TCP/IP address. Other than processing the input TCP/IP address and a complete network domain name, the number inputted by the user is converted into respective or related TCP/IP address by a complete contrast or a fuzzy contrast way. By complete contrast or fuzzy contrast, other than providing the function of converting domain name and TCP/IP address in the prior art domain name system DNS servo, the network dial-up servo system can enter numbers in the input universal resource location box of a browser frame and then performs an query request service about numbers and TCP/IP address by complete contrast or fuzzy contrast so that as the user enters an number, then the number is converted into a respective or a related TCP/IP address for finding the respective or related TCP/IP address. When the TCP/IP address is found, then by the network dial-up servo system, the customer's computer 1 is connected to the World Wide Web for the data and message of the homepage and message of the network 3 is sent to the customer's computer 1 through the network dial-up servo system 2. Then, they are presented in the browser frame.

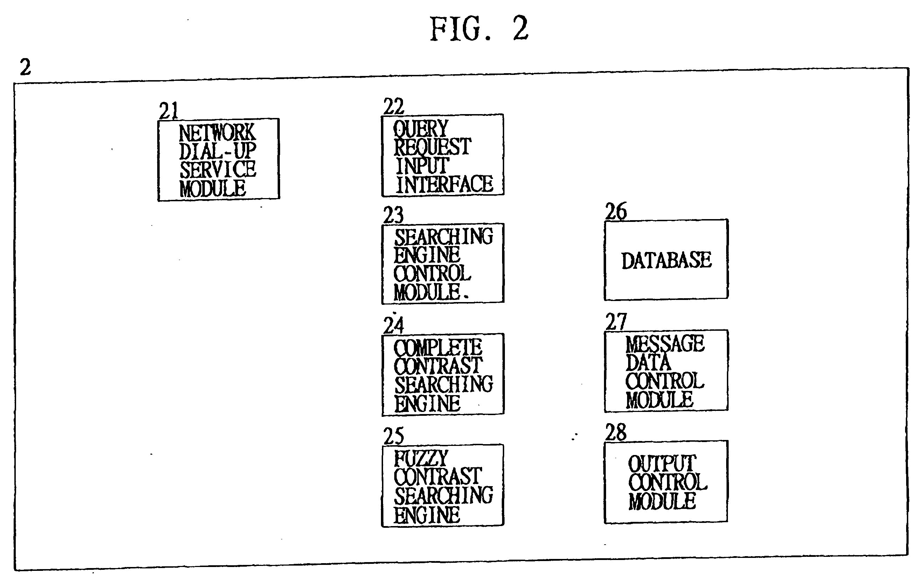

Fig. 2 shows a system block diagram, wherein basic structure block diagram about the network dial-up servo method and network dial-up servo system of the present invention is illustrated. As shown in the figure, the network dial-up servo system 2 includes a network dial-up service module 21, a query request input interface 22, a searching engine control module 23, a complete contrast searching engine 24, a fuzzy contrast searching engine 25, a database 26, a message data control module 27, and an output control module 28,

The network dial-up service module 21 provides a network dial-up service. The user in the network dial-up service module 21 has the user account and user authority and then he (or she) may be connected to the network dial-up service module 21 through a network. After the user's computer 1 is connected to the network dial-up service module 21 through a network, then the user may input data on the input universal resource location box of the browser frame for requesting to the network dial-up servo system 2. By the service of the network dial-up servo system 2, the frame is connected to another network station homepage. After the network dial-up service module 21 receives the connecting request for the network station homepage from the customer's computer 1. The connection request is inputted to the query request input interface 22.

The query request input interface 22 serves for receiving a query request from the user's computer through the network dial-up service module 21 for informing the message data control module 27 to repair for receiving the query result from the searching engine control module 23. The query request input interface 22 sends the query result from the user end to the searching engine control module 23 for being further processed.

The searching engine control module 23 serves for receiving the query request from the query request input interface 22 (therefore, number is converted into respective TCP/IP address) and controls and manages to the complete contrast searching engine 24 and the fuzzy contrast searching engine 25. Then, this query request is sent to the complete contrast searching engine 24. The searching engine control module 23 sends the TCP/IP address respective or related to the TCP/IP address found after operation of the complete contrast searching engine 24, fuzzy contrast searching engine 25, and database 26.

The complete contrast searching engine 24 will receive the number data of the query request from the searching engine control module 23 and performs the operation of data and TCP/IP address contrast according to the number data and with the assisting of the database 26 for finding the network station homepage address with respect to these number data. When executing the contrast of number with network station homepage address by the complete contrast searching engine 24, the network station homepage address with respect to the number is acquired by a complete contrast way. When the complete contrast searching engine 24 performs contrast of number with the network station homepage address, if the network station homepage address with respect to the number can not be found by the complete contrast method, the complete contrast searching engine 24 inputs this data into the fuzzy contrast searching engine 25 for fuzzy contrasting these number data with the network station homepage address by the fuzzy contrast searching engine 25.

The fuzzy contrast searching engine 25 receives the query request number data from the complete contrast searching engine 24, and performs the operation of contrasting the number with TCP/IP address for finding related network station homepage addresses with respect to these numbers. In performing the operation of contrast of numbers with TCP/IP addresses, the fuzzy contrast searching engine 25 queries the numbers by a fuzzy contrast way for finding the related network station homepage address data. When performing the operation of contrast of number data by a fuzzy contrast searching engine 25, even the input data from the users are not complete or not correct wholly, the fuzzy contrast searching engine 25 may still perform the operation of contrasting the numbers with the network station homepage addresses so as to find some network station homepage addresses related to the input data. After the fuzzy contrast searching engine 25 finds network station homepage addresses with respect to the number data. Then the data about the network station homepage addresses is sent to the searching engine control module 23.

The database 26 serves for storing indexs of number type which is correspondent to data of the World Wide Web homepage stored in the database 26. When adding all the new network station homepage addresses to the database 26, number type indexs are added for these network station homepage addresses. The new added indexs is correspondent to the network station homepage addresses in the database 26. By the digital of the number in the number index, the network station homepages are classified. By the number in different digital, the network station homepage is classified into different layers and classes. Namely, by the index, the network station homepages and data are classified into different layers and classed. For example, in the index in the database, the number with 3 in the first digital is used to represent network station homepage index about restaurant. That is, for some number with a first digital of 3, the item with respect to number is a index about the network station homepage of restaurant. In the network station homepage index of the same type, the second digital in the number of the index represents a sub-class. For example, 31 represent the index of network station homepage about restaurants of west style food, and 32 represent the index of network station homepage about restaurants of Chinese food. However, the first digitals of the 31 and 32 are 3 which represents index about restaurants, while 1 and 2 (in the 31 and 32, respectively) represents a sub-class. For example, 1 represents west style food and 2 represents Chinese food.

By the searching engine control module 23, the message data control module 27 finds the network to be searched by the user or related network by from the TCP/IP addresses with respect to or related to the number data inputted by the user through a complete contrast of a fuzzy contrast searching engine 25 or fuzzy contrast way of the fuzzy contrast searching engine 25. The searching engine control module 23 connects the browser in the user's computer 1 to the network to be searched or related for sending the data message of the searched network or related network station homepage to the user's computer 1 through the output control module 28, and these network station homepages are displayed on the browser frame.

The output control module 28 is controlled by the message data control module 27 for sending the network station homepages for the correspondent or related networks to the browser of the customer's computer connected to the network dial-up servo system 2.

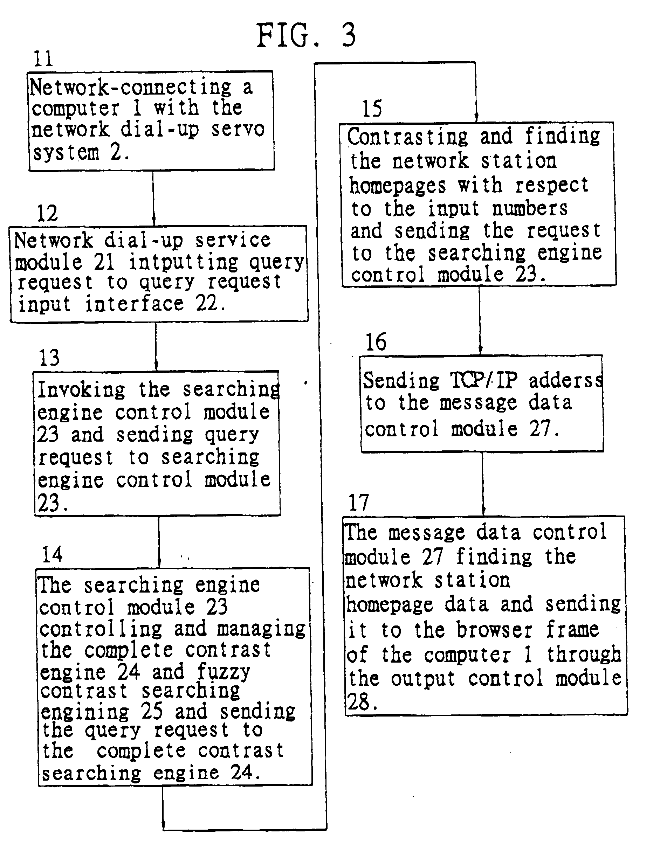

Fig. 3 is a flow schematic view about the network dial-up servo method of the present invention for executing the process of checking the network station homepages. As shown in the figure, in step 11, a user is connected to the network dial-up service module 21 of the network dial-up servo system 2 through a phone wire. After the user's computer 1 is connected to the network dial-up service module 21 through a network, the user may enter numbers to the input universal resource location box in the browser frame for requesting a query to the network dial-up servo system 2 so that through the service of the network dial-up servo system 2, it is connected to other network station homepage. Then, the process enters into step 12.

In step 12, the network dial-up service module 21 receives the request for the connection of the network station homepage from the customer's computer 1. The connection request is inputted to the query request input interface 22. Then, the process enters into step 13.

In step 13, the query request input interface 22 receives the query request from the customer's computer 1 of the network dial-up service module 21. Then it invokes the searching engine control module 23 for informing the message data control module 27 to receive the query result from the searching engine control module 23. The query request input interface 22 sends the query request from the customer's computer 1 to the searching engine control module 23. Then, the process enters into step 14.

In step 14, when the searching engine control module 23 is actuated by the query request input interface 22, the searching engine control module 23 will receive the query request from the query request input interface 22 (for converting a number into a respective TCP/IP address) and controls and manages to the complete contrast searching engine 24 and the fuzzy contrast searching engine 25. Then, this query request is sent to the complete contrast searching engine 24. Then, the process enters into step 15.

In step 15, The complete contrast searching engine 24 performs the operation of contrasting the data with TCP/IP addresses according to the number data inputted by the user and with the assisting of the database 26 for finding the network station homepage addresses with respect to these number data. Then, the data of the network station homepage is sent to the searching engine control module 23, or the complete contrast searching engine 24 inputs these numbers into the fuzzy contrast searching engine 25. The fuzzy contrast searching engine 25 perform the operation of contrasting the numbers with the TCP/IP addresses according to the number data from the complete contrast searching engine 24 and with the assisting of the database 26 for contrasting and finding network stations related to these numbers. Then the network station homepage addresses is sent to the searching engine control module 23. The process further enters into the step 16.

In step 16, the searching engine control module 23 receives the network station homepage data respective or related to the number data from the complete contrast searching engine 24 or the fuzzy contrast searching engine 25. Then, this query request is sent to the complete contrast searching engine 24. The searching engine control module 23 sends the respective TCP/IP address or related to the TCP/IP address to the message data control module 27. The process further enters into the step 17.

In step 17, when the message data control module 27 receives the TCP/IP address respective or related to the number data, the message data control module 27 finds the network stations searched by the user or related network stations through the TCP/IP address. Then the browser in the customer's computer 1 is network-connected to the searched network stations or network stations related for sending the data thereof to the browser of the user's computer through the output control module 28. The output control module 28 is controlled by the message data control module 27 for sending the home page data of the searched network stations or network stations related to the browser of the network dial-up servo system 2 and then the data is displayed on the browser frame.

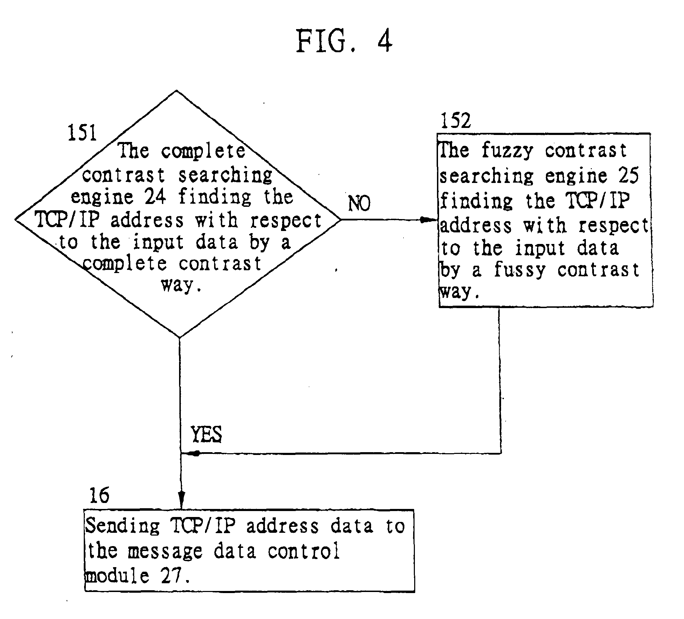

Fig. 4 is a flow schematic view for explaining the detain process of the contrast of number data by the complete contrast searching engine or the fuzzy contrast searching engine with the database. At first, in step 151, the complete contrast searching engine 24 receives the number data of the query request from the searching engine control module 23, then according to the number data inputted by the user and with the database 26, the operation of contrast the number data with TCP/IP addresses are performed. If in the contrast of the number data with the network station homepage addresses, the complete contrast searching engine 24 can acquire the respective network station homepage addresses by a complete contrast way, then the complete contrast searching engine 24 will send the network station homepage address data to the searching engine control module 23. If in the contrast of the number data with the network station homepage addresses, the complete contrast searching engine 24 can not acquire the respective network station homepage addresses by a complete contrast way, then the complete contrast searching engine 24 will send the number data to the fuzzy contrast searching engine 25. The process further enters into the step 152.

In step 152, the fuzzy contrast searching engine 25 performs the operation of fuzzy-contrasting to the number data with the TCP/IP address. The fuzzy contrast searching engine 25 receives the query request number data from the complete contrast searching engine 24, and performs the operation of contrasting the number with TCP/IP address for finding related network station homepage addresses with respect to these numbers. In performing the operation of contrast of numbers with TCP/IP addresses, the fuzzy contrast searching engine 25 queries the numbers by a fuzzy contrast way for finding the related network station homepage address data. When performing the operation of contrast of number data by a fuzzy contrast searching engine 25, even the input data from the users are not complete or not correct wholly, the fuzzy contrast searching engine 25 may still perform the operation of contrasting the numbers with the network station homepage addresses so as to find some network station homepage addresses related to the input data. After the fuzzy contrast searching engine 25 finds network station homepage addresses with respect to the number data. Then the data about the network station homepage addresses is sent to the searching engine control module 23.

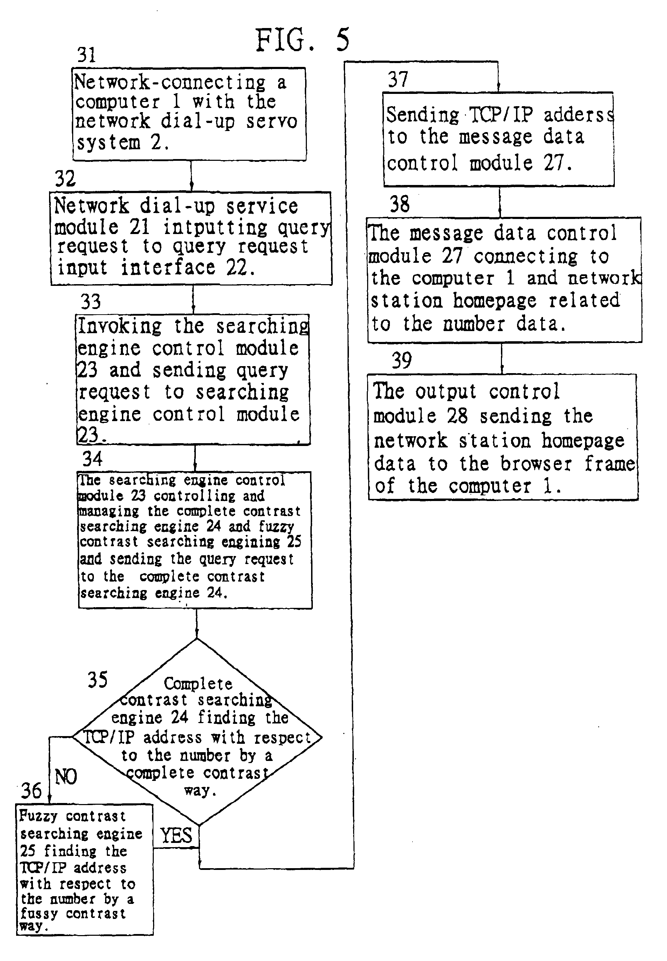

Fig. 5 is a flow diagram showing the checking the network station homepage through the network dial-up servo method of the present invention. As shown in the figure, at first, in step 31, a user is connected to the network dial-up service module 21 of the network dial-up servo system 2 through a phone wire. After the user's computer 1 is connected to the network dial-up service module 21 through a network, the user may enter numbers to the input universal resource location box in the browser frame for requesting a query to the network dial-up servo system 2 so that through the service of the network dial-up servo system 2, it is connected to other network station homepage. Then, the process enters into step 32.

In step 32, the network dial-up service module 21 receives the request for the connection of the network station homepage from the customer's computer 1. The connection request is inputted to the query request input interface 22. Then, the process enters into step 33

In step 33, the query request input interface 22 receives the query request from the customer's computer 1 of the network dial-up service module 21. Then it invokes the searching engine control module 23 for informing the message data control module 27 to receive the query result from the searching engine control module 23. The query request input interface 22 sends the query request from the customer's computer 1 to the searching engine control module 23. Then, the process enters into step 34.

In step 34, when the searching engine control module 23 is actuated by the query request input interface 22, the searching engine control module 23 will receive the query request from the query request input interface 22 (for converting a number into a respective TCP/IP address) and controls and manages to the complete contrast searching engine 24 and the fuzzy contrast searching engine 25. Then, this query request is sent to the complete contrast searching engine 24. Then, the process enters into step 35.

In step 35, after the complete contrast searching engine 24 receives the number data of query request from the searching engine control module 23, the complete contrast searching engine 24 performs the operation of contrasting the data with TCP/IP addresses according to the number data inputted by the user and with the assisting of the database 26 for finding the network station homepage addresses with respect to these number data. If in the contrast of the number data with the network station homepage addresses, the complete contrast searching engine 24 can acquire the respective network station homepage addresses by a complete contrast way, then the complete contrast searching engine 24 will send the network station homepage address data to the searching engine control module 23. If in the contrast of the number data with the network station homepage addresses, the complete contrast searching engine 24 can not acquire the respective network station homepage addresses by a complete contrast way, then the complete contrast searching engine 24 will send the number data to the fuzzy contrast searching engine 25. The process further enters into the step 36.

In step 36, the fuzzy contrast searching engine 25 perform the operation of contrasting the numbers with the network station homepages. The fuzzy contrast searching engine 25 receives the query request number data from the complete contrast searching engine 24, and performs the operation of contrasting the number with TCP/IP address with the database 26 for finding related network station homepage addresses with respect to these numbers. In performing the operation of contrast of numbers with TCP/IP addresses, the fuzzy contrast searching engine 25 queries the numbers by a fuzzy contrast way for finding the related network station homepage address data. When performing the operation of contrast of number data by a fuzzy contrast searching engine 25, even the input data from the users are not complete or not correct wholly, the fuzzy contrast searching engine 25 may still perform the operation of contrasting the numbers with the network station homepage addresses so as to find some network station homepage addresses related to the input data. After the fuzzy contrast searching engine 25 finds network station homepage addresses with respect to the number data. Then the data about the network station homepage addresses is sent to the searching engine control module 23. The process further enters into the step 37.

In step 37, the searching engine control module 23 receives the network station homepage data respective or related to the number data from the complete contrast searching engine 24 or the fuzzy contrast searching engine 25. Then, this query request is sent to the complete contrast searching engine 24. The searching engine control module 23 sends the respective TCP/IP address or related to the TCP/IP address to the message data control module 27 through the complete contrast searching engine 24 or through the operation of the complete contrast searching engine 24, fuzzy contrast searching engine 25 and database 26. The process further enters into the step 38.

In step 38, when the message data control module 27 receives the TCP/IP address respective or related to the number data from the complete contrast searching engine 24 or fuzzy contrast searching engine 25 through the searching engine control module 23, the message data control module 27 finds the network stations searched by the user or related network stations through the TCP/IP address. Then the browser in the customer's computer 1 is network-connected to the searched network stations or network stations related for sending the data thereof to the browser of the user's computer through the output control module 28. The process further enters into the step 39.

In step 39, the output control module 28 is controlled by the message data control module 27 for sending the respective or related searched network station homepage data to the browser of the network dial-up servo system 2 and then the data is displayed on the browser frame.

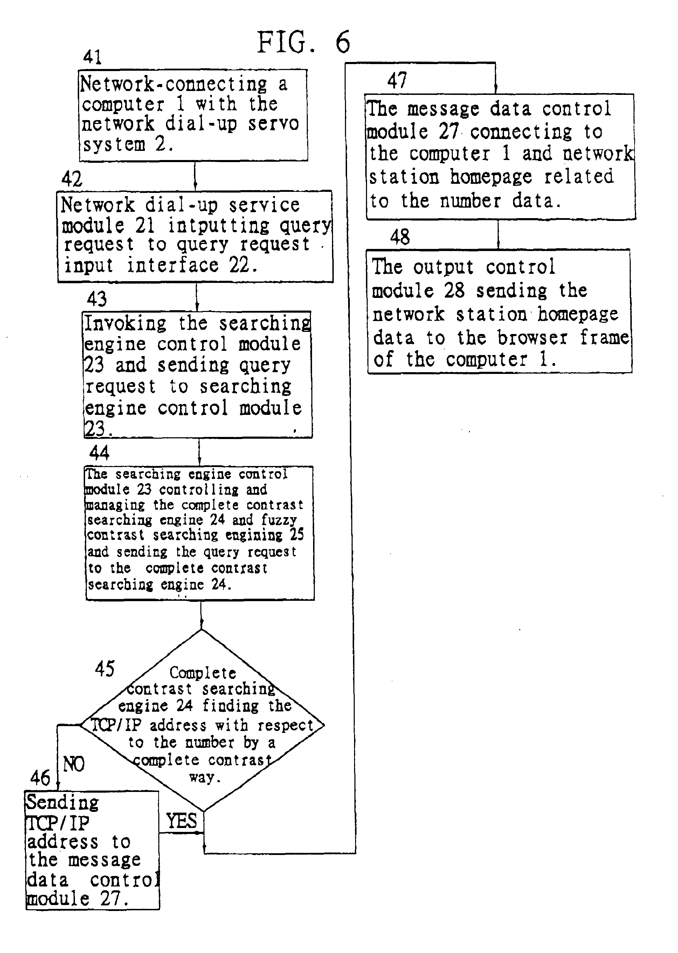

Fig. 6 is a schematic flow diagram showing the checking the network station homepage through the network dial-up servo method of the present invention after the user has inputted numbers. As shown in the figure, at first, in step 41, a user is connected to the network dial-up service module 21 of the network dial-up servo system 2 through a phone wire. After the user's computer 1 is connected to the network dial-up service module 21 through a network, the user may enter a number [211] to the input universal resource location box in the browser frame for requesting a query to the network dial-up servo system 2 so that through the service of the network dial-up servo system 2, it is connected to other network station homepage. Then, the process enters into step 42.

In step 42, the network dial-up service module 21 receives the request for the connection of the network station homepage from the customer's computer 1. The connection request is inputted to the query request input interface 22. Then, the process enters into step 43.

In step 43, the query request input interface 22 receives the query request number [211] from the customer's computer 1 of the network dial-up service module 21. Then it invokes the searching engine control module 23 for informing the message data control module 27 to receive the query result from the searching engine control module 23. The query request input interface 22 sends the query request number [211] from the customer's computer 1 to the searching engine control module 23. Then, the process enters into step 44.

In step 44, when the searching engine control module 23 is actuated by the query request input interface 22, the searching engine control module 23 will receive the query request from the query request input interface 22 (for converting a number [211] into a respective TCP/IP address) and controls and manages to the complete contrast searching engine 24 and the fuzzy contrast searching engine 25. Then, this query request is sent to the complete contrast searching engine 24. Then, the process enters into step 45.

In step 45, after the complete contrast searching engine 24 receives the number data [211] of query request from the searching engine control module 23, the complete contrast searching engine 24 performs the operation of contrasting the data with TCP/IP addresses according to the number data [211] inputted by the user and with the assisting of the database 26 for searching finding the network station homepage address with respect to this number data. The complete contrast searching engine 24 completely contrasts the input number [211] with the assisting of the database 26. By the number in different digital, the data are classified into different layers and classes by the database 26. Namely, each datum has three digitals. In the database 26, the numbers of three digials are [211], [212], [213], [214], [220], [221], [222], [230], [231], and [232]. The user inputs number [211], after performing the operation of complete contrast by the complete contrast searching engine 24 with the database 26, a number [211] of three digitals is acquired, the complete contrast searching engine 24 finds a TCP/IP address or a complete domain name respective the number [211] from the database 26. Namely, after the complete contrast, the TCP/IP address or complete domain name correspondent to the network station homepage to be searched by the user is acquired according to the input data [211]. Then, the complete contrast searching engine 24 will send the network station homepage address data to the searching engine control module 23. Then, the process enters into step 46.

In step 46, the searching engine control module 23 receives the network station homepage data respective or related to the number data [211] from the complete contrast searching engine 24. The searching engine control module 23 sends the TCP/IP address with respect to the number [211] to the message data control module 27 through the operation of the complete contrast searching engine 24 and database 26. The process further enters into the step 47.

In step 47, when the message data control module 27 receives the TCP/IP address respective to the number data [211] from the complete contrast searching engine 24 or fuzzy contrast searching engine 25 through the searching engine control module 23, the message data control module 27 finds the network stations searched by the user through the TCP/IP address. Then the browser in the customer's computer 1 is network-connected to the searched network stations for sending the data thereof to the browser of the user's computer through the output control module 28. The process further enters into the step 48.

In step 48, the output control module 28 is controlled by the message data control module 27 for sending the searched network station homepage data to the browser of the network dial-up servo system 2 and then the data is displayed on the browser frame.

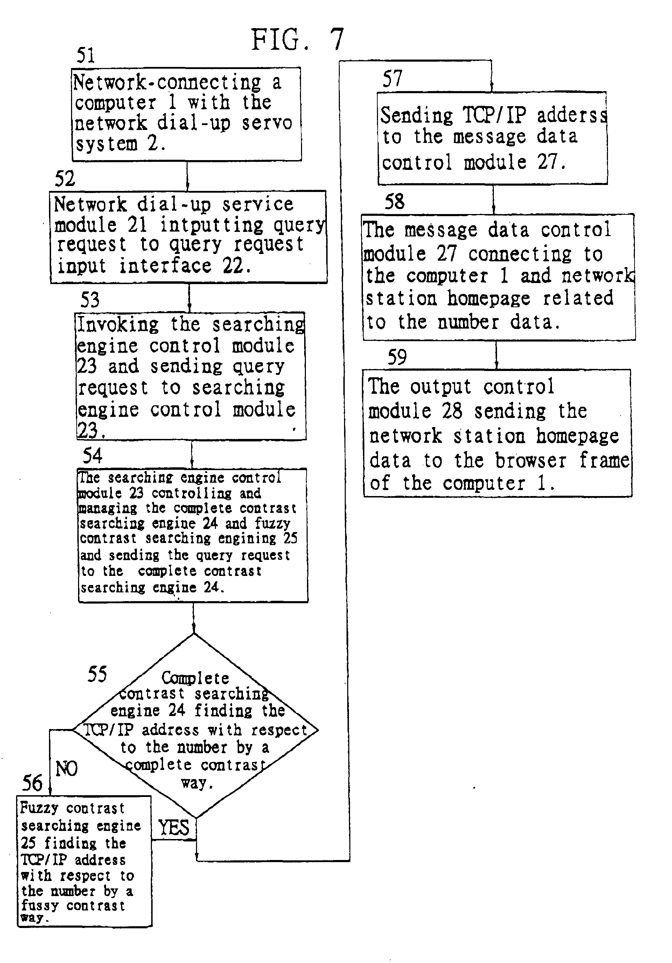

Fig. 7 is a schematic flow diagram showing the checking the network station homepage through the network dial-up servo method of the present invention after the user has inputted numbers, in which a fuzzy contrast is used in the checking the network station homepage. As shown in the figure, at first, in step 51, a user is connected to the network dial-up service module 21 of the network dial-up servo system 2 through a phone wire. After the user's computer 1 is connected to the network dial-up service module 21 through a network, the user may enter a number [21] to the input universal resource location box in the browser frame for requesting a query to the network dial-up servo system 2 so that through the service of the network dial-up servo system 2, it is connected to other network station homepage. Then, the process enters into step 52.

In step 52, the network dial-up service module 21 receives the request for the connection of the network station homepage from the customer's computer 1. The connection request is inputted to the query request input interface 22. Then, the process enters into step 53.

In step 53, the query request input interface 22 receives the query request number [21] from the customer's computer 1 of the network dial-up service module 21. Then it invokes the searching engine control module 23 for informing the message data control module 27 to receive the query result from the searching engine control module 23. The query request input interface 22 sends the query request number [21] from the customer's computer 1 to the searching engine control module 23. Then, the process enters into step 54.

In step 54, when the searching engine control module 23 is actuated by the query request input interface 22, the searching engine control module 23 will receive the query request from the query request input interface 22 (for converting a number [21] into a respective TCP/IP address) and controls and manages to the complete contrast searching engine 24 and the fuzzy contrast searching engine 25. Then, this query request is sent to the complete contrast searching engine 24. Then, the process enters into step 55.

In step 55, after the complete contrast searching engine 24 receives the number data [21] of query request from the searching engine control module 23, the complete contrast searching engine 24 performs the operation of contrasting the data with TCP/IP addresses according to the number data [21] inputted by the user and with the assisting of the database 26 for searching and finding the network station homepage address with respect to this number data. The complete contrast searching engine 24 completely contrasts the input number [21] with the assisting of the database 26. By the number in different digital, the data are classified into different layers and classes by the database 26. Namely, each datum has three digitals. In the database 26, the numbers of three digials are [211], [212], [213], [214], [220], [221], [222], [230], [231], and [232]. The user inputs number [21], after performing the operation of complete contrast by the complete contrast searching engine 24 with the database 26, it will discover that no data is matched to the number [21], i.e., the TCP/IP address or a complete domain name respective the number [21] can not be found. Then, the process enters into step 56

In step 56, the fuzzy contrast searching engine 25 performs the operation of contrasting the numbers with the network station homepages for the number [21]. The fuzzy contrast searching engine 25 receives the query request number data [21] from the complete contrast searching engine 24, and performs the operation of contrasting the number with TCP/IP address with the database 26 for finding related network station homepage addresses with respect to these numbers. In performing the operation of contrast of numbers with TCP/IP addresses, the fuzzy contrast searching engine 25 queries the numbers by a fuzzy contrast way for finding the related network station homepage address data and acquires the TCP/IP address or a complete domain name with respect to the network station homepage data. By the number in different digital, the data are classified into different layers and classes by the database 26. Namely, each datum has three digitals. In the database 26, the numbers of three digitals are [211], [212], [213], [214], [220], [221], [222], [230], [231], and [232]. The user inputs number [21], after performing the operation of fuzzy contrast by the fuzzy contrast searching engine 25 with the database 26, it will discover that data of [211], [212], [213], [214], [221], and [231] are similar to the number [21]. This is because that after fuzzy contrast, the number [21] has a possibility of over 50 % (about 70%) similar to these data, in fact, the similarity is 2/3 connector. Then, the fuzzy contrast searching engine 25 finds the TCP/IP addresses or complete domain names with respect to the [211], [212], [213], [214], [221], and [231] from the database 26. After the fuzzy contrast searching engine 25 finds the network station homepage data related to the number [21], and then, the network station homepage data is sent to the searching engine control module 23. Then, the process enters into step 57.

In step 57, the searching engine control module 23 receives the network station homepage data respective or related to the number data [21] from the complete contrast searching engine 24. The searching engine control module 23 sends the TCP/IP addresses with respect to the number [21] to the message data control module 27 through the operation of the complete contrast searching engine 24 and database 26. The process further enters into the step 58.

In step 58, when the message data control module 27 receives the TCP/IP addresses respective to the number data [21] from fuzzy contrast searching engine 25 through the searching engine control module 23, the message data control module 27 finds the network stations searched by the user through the TCP/IP addresses. Then the browser in the customer's computer 1 is network-connected to the searched network stations for sending the data thereof to the browser of the user's computer through the output control module 28. The process further enters into the step 59.

In step 59, the output control module 28 is controlled by the message data control module 27 for sending the searched network station homepage data to the browser of the network dial-up servo system 2 and then the data is displayed on the browser frame.

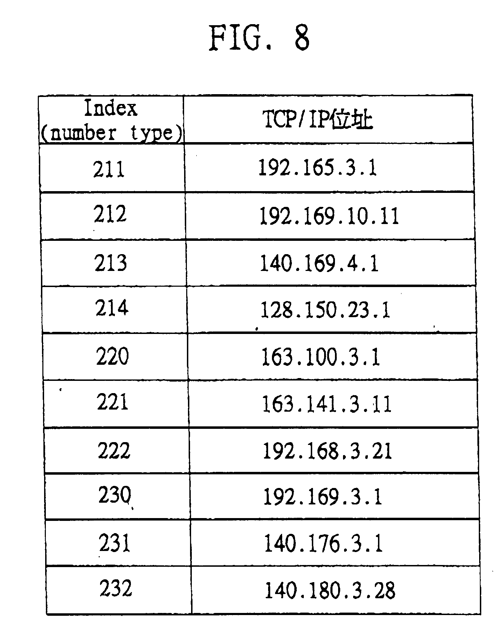

Fig. 8 is a schematic view showing the relations between the data stored in the database with the TCP/IP addresses or complete domain names according to network dial-up servo system in the embodiments of checking the network station homepage of Figs. 6 and 7, in which different numbers are respective to the different TCP/IP addresses and domain names. As shown in figure, in the database 26 of the network dial-up servo system 2, the data of three digitals are [211], [212], [213], [214], [220], [221], [222], [230], [231], and [232]. The number of [211] has a correspondent TCP/IP address of 192.165.3.1; the number of [212] has a correspondent TCP/IP address of 192.169.10.11; the number of [213] has a correspondent TCP/IP address of 140.169.4.1; the number of [214] has a correspondent TCP/IP address of 128.150.23.1; the number of [220] has a correspondent TCP/IP address of 163.100.3.1; the number of [221] has a correspondent TCP/IP address of 163.141.3.11; the number of [222] has a correspondent TCP/IP address of 192.168.3.21; the number of [230] has a correspondent TCP/IP address of 192.169.3.1; the number of [231] has a correspondent TCP/IP address of 140.176.3.1; and the number of [232] has a correspondent TCP/IP address of 140.180.3.28.

From above embodiments, it is appreciated that the network dial-up servo system and method are used in internet. The database of the network dial-up servo system stores the index of number type. These indexs are correspondent to the World Wide Web homepage data in the database. The users are connected to the network dial-up servo system by a phone dial-up operation. After the customer's computer is network-connected to the network dial-up servo system, the user inputs a number from the input universal resource location box in browser frame. By the services and operations of the network dial-up servo system, a complete contrast and a fuzzy contrast way is used to search for a network station homepage. The browser in the customer's computer may be connected to the World Wide Web homepage. In the present invention, a novel network dial-up servo system and method are used. Other than providing the conversion function of domain names into TCP/IP addresses in the domain name system DNS servo, the database of the network dial-up servo system stores the indexs of number type which is respective to the World Wide Web homepage address data stored in the database. The user's computer is connected to the network dial-up servo system through a network. The user input directly the TCP/IP address or number from the input universal resource location box of the browser frame and queries a request to the network dial-up servo system. Through the processing of the network dial-up servo system, the input number data is converted into respective or pertinent TCP/IP address. Other than processing the input TCP/IP address and a complete network domain name, the number inputted by the user is converted into respective or related TCP/IP address by a complete contrast or a fuzzy contrast way so as to further search for the network station homepage to be found. The browser in the customer's computer can be connected to the World Wide Web homepage without enter into the portal network station homepage provided by the ISP Internet dial-up service provider or other portal network station homepage. By complete contrast or fuzzy contrast, the network dial-up servo system can enter numbers in the input universal resource location box of a browser frame and then searches other network station homepage by a complete contrast or a fuzzy contrast way. The user is unnecessary to enter into the input field for searching in any network station homepage and is unnecessary to input any data in any portal network station homepage or to select the items in the generic menu in the network station homepage for finding other network station to be searched. Furthermore, with comparing to the domain name system DNS servo of the ISP Internet dial-up service provider and the searching system for the portal network stations of the ISP Internet dial-up service provider, in the database of the network dial-up servo system in the present invention, by the digital property, the network stations are classified and the number in different digitals are used to classified the network stations. Namely, by the number index, other network stations are used to classify other network stations. The advantage of the network dialup servo system according to the present invention are:
1. A network dial-up servo system and a method of the same are provided. In the database of the network dial-up servo system in the present invention, by the digital property, the network stations are classified and the number in different digitals are used to classified the network stations. The database of the network dial-up servo system stores the index of number type. These indexs are correspondent to the World Wide Web homepage data in the database. The user inputs a number from the input universal resource location box in browser frame. By the services and operations of the network dial-up servo system, a complete contrast way is used to search for a network station homepage.
2. The network dial-up servo system searches for a TCP/IP address according to the number inputted by the user through a complete contrast way. If the complete contrast can no find a desired TCP/IP address, then the fuzzy contrast is used to find the network station homepage related to the number.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A network dial-up servo method, for use with a network dial-up servo system including a network dial-up service module, a query request input interface, a searching engine control module, a complete contrast searching engine, a fuzzy contrast searching engine, a database, a message data control module and an output control module, wherein the database of the network dial-up servo system stores number-type indexes, and the indexes correspond to address data relating to web sites in World Wide Web stored in the database, for allowing a user to input a number to an input box in a browser of the user's computer and retrieve the web sites through the network dial-up servo system; the network dial-up servo method comprising the steps of:
(1) establishing network connection of a user's computer to the network dial-up service module through a telephone line, for allowing a user to input a number to an input box in a browser of the user's computer and generate a query request to the network dial-up servo system for accessing a web site through the network dial-up servo system;
(2) receiving the query request from the user and inputting the query request via the network dial-up service module to the query request input interface;
(3) receiving the query request from the network dial-up service module and activating the searching engine control module via the query request input interface; transferring the query request to the searching engine control module via the query request input interface;
(4) receiving the query request from the query request input interface via the searching engine control module; controlling and managing the complete contrast searching engine and the fuzzy contrast searching engine, and transferring the query request to the complete contrast searching engine via the searching engine control module;
(5) performing a complete contrast process between the number input by the user and a TCP/IP address in the use of the database via the complete contrast searching engine, for searching a web site corresponding to the number and transferring address data relating to the corresponding web site to the searching engine control module; if no available corresponding web site, the complete contrast searching engine inputting the number to the fuzzy contrast searching engine, and the fuzzy contrast searching engine performing a fuzzy contrast process between the number input from the complete contrast searching engine and a TCP/IP address in the use of the database, so as to search a web site relating to the number and transfer address data relating to the related web site to the searching engine control module;
(6) receiving the address data relating to the corresponding web site or the related web site from the complete contrast searching engine or the fuzzy contrast searching engine via the searching engine control module, and transferring a TCP/IP address of the corresponding web site or the related web site to the message data control module; and
(7) retrieving the corresponding web site or the related web site according to the TCP/IP address from the searching engine control module via the message data control module, and connecting the user's computer to the retrieved web site for displaying a homepage of the retrieved web site in the browser of the user's computer through the output control module.

2. The network dial-up servo method of claim 1, wherein the step (5) comprises the steps of:
(5-1) performing a complete contrast process between the number input by the user and a TCP/IP address in the use of the database via the complete contrast searching engine, so as to search a web site corresponding to the number in a complete contrast manner; if the corresponding web site being available, the complete contrast searching engine transferring address data relating to the corresponding web site to the searching engine control module; if no available corresponding web site, the complete contrast searching engine inputting the number to the fuzzy contrast searching engine, and performing step (5-2); and
(5-2) performing a fuzzy contrast process between the number input from the complete contrast searching engine and a TCP/IP address in the use of the database via the fuzzy contrast searching engine, so as to search a web site relating to the number in a fuzzy contrast manner and transfer address data relating to the related web site to the searching engine control module.

3. The network dial-up servo system of claim 1, further consisting the step of displaying the homepage of the retrieved web site in the brower of the user's computer via the output control module controlled by the message data control module, subsequent to the completion of step (7).

4. The network dial-up servo method of claim 1, further comprising the step of performing a fuzzy contrast process between the number input from the complete contrast searching engine and a TCP/IP address in the use of the database via the fuzzy contrast searching engine, so as to search a web site relating to the number in a fuzzy contrast manner and transfer address data relating to the related web site to the searching engine control module, subsequent to the completion of step (5).

5. A network dial-up servo system, for use in Internet, having number-type indexes corresponding to address data relating to web sites in World Wide Web, for allowing a user to input a number to an input box in a browser of the user's computer and retrieve the web sites through the network dial-up servo system; the network dial-up servo system comprising:
a data base for storing number-type indexes corresponding to address data relating to web sites in World Wide Web, and classifying the web sites according to numbers of the corresponding number-type indexes, wherein if additional data relating to new web sites are provided for the database, corresponding number-type indexes are increased in the database for the new web sites.

6. The network dial-up servo system, for use in Internet, having number-type indexes corresponding to address data relating to web sites in World Wide Web, for allowing a user to input a number to an input box in a browser of the user's computer and retrieve the web sites through the network dial-up servo system; the network dial-up servo system comprising:
a network dial-up service module for providing network dial-up service to establish network connection of the user's computer to the network dial-up service module through a telephone line for a user having an account and access in the network dial-up service module, so as to allow the user to input a number to an input box in a browser of the user's computer and generate a query request to the network dial-up servo system for accessing a web site through the network dial-up servo system, wherein the query request is transferred by the network dial-up service module to a query request input interface;
a query request input interface for receiving the query request from the network dial-up service module, and activating a searching engine control module so as to transfer the query request to the searching engine control module;
a searching engine control module for receiving the query request from the query request input interface, and controlling and managing a complete contrast searching engine, wherein the query request is transferred to the complete contrast searching engine for performing a contrast process, and a result from the contrast process is transferred to a message data control module;
a complete contrast searching engine for receiving the query request from the searching engine control module and performing a contrast process between the number input by the user and a TCP/IP address in the use of a database, so as to search a web site corresponding to the number in a complete contrast manner and transfer address data relating to the corresponding web site to a searching engine control module;
a database for storing number-type indexes corresponding to address data relating to web sites in World Wide Web, and classifying the web sites according to numbers of the corresponding number-type indexes, wherein if additional data relating to new web sites are provided for the database, corresponding number-type indexes are increased in the database for the new web sites;
a message data control module for receiving the address data relating to the corresponding web site from the searching engine control module, and retrieving the corresponding web site according to a TCP/IP address of the corresponding web site, so as to connect the user's computer to the retrieved web site and control an output control module for displaying a homepage of the retrieved web site in the browser of the user's computer; and
an output control module controlled by the message data control module, for transferring the homepage of the retrieved web site to the browser of the user's computer.

7. The network dial-up servo system of claim 6, further comprising:
a fuzzy contrast searching engine for receiving the number from the complete contrast searching engine and performing a fuzzy contrast process between the number and a TCP/IP address in the use of the database via the fuzzy contrast searching engine, so as to search a web site relating to the number in a fuzzy contrast manner that the related web site is obtained even if the number is incomplete or not entirely correct, and to transfer address data relating to the related web site to the searching engine control module.
